# FASCICULE DE BREVET EUROPEEN

(11) **EP 1 496 332 B1**
(45) Date de publication et mention de la délivrance du brevet: **20.05.2009**
(21) Numéro de dépôt: 04291732.8
(22) Date de dépôt: 08.07.2004
(51) Int. Cl.: F42B 3/04

(54) **Générateur de gaz pyrotechnique à pression modulable**
Pyrotechnischer Gasgenerator mit regelbarem Gasdruck
Pyrotechnic gas generator with adjustable pressure

(30) Priorité: 10.07.2003 FR 0308478
(43) Date de publication de la demande: 12.01.2005
(73) Titulaire: SNPE Matériaux Energétiques, 75004 Paris (FR)
(72) Inventeur: Humbert, Pierre, 91820 Boutigny/Essone (FR); Mobuchon, Alain, 91710 Vert Le Petit (FR)
(74) Mandataire: Le Roux, Martine

(56) Documents cités:
- US-A- 3 827 715
- US-A- 3 897 962
- US-A- 3 986 456

## Description

Le domaine de l'invention est celui des générateurs de gaz pyrotechniques applicables à toute sorte d'activité industrielle et généralement utilisés pour pressuriser une structure déformable ou déplacer une pièce mécanique. Plus spécifiquement, l'invention se rapporte aux générateurs de gaz pyrotechniques munis d'un dispositif de régulation de pression dans le but d'adapter leurs performances aux applications envisagées, nécessitant une production de gaz plus ou moins importante, tout en garantissant un bon niveau de sécurité. Ces générateurs de gaz peuvent, par exemple, être utilisés en sécurité automobile et plus particulièrement dans des dispositifs de type coussins gonflables.

Les générateurs de gaz munis d'un dispositif de régulation de pression existent déjà et ont déjà fait l'objet de plusieurs brevets. Les plus connus font généralement intervenir des dispositifs de régulation de pression simplifiés comme des opercules calibrés ou des clapets. D'autres générateurs mettent en oeuvre des mécanismes un peu plus sophistiqués impliquant notamment des pièces précontraintes comme des ressorts, plaquant un obturateur à l'entrée d'un conduit d'évacuation des gaz. Le dispositif décrit dans le brevet US 3,986,456 fait intervenir une rondelle Belleville dans un contexte de chambre de combustion coulissante (sans possiblité de réglage après le montage du générateur). Aucun de ces générateurs ne possède en fait un dispositif de régulation de pression réglable permettant de maîtriser le débit de gaz et donc la pression de fonctionnement desdits générateurs par une simple manipulation sur ledit dispositif. De cette manière, les générateurs de gaz selon l'invention, une fois qu'ils ont été fabriqués, peuvent être modifiés au dernier moment de façon à les adapter à la situation rencontrée.

L'objet de la présente invention concerne un de gaz pyrotechnique à pression modulable comprenant une charge pyrotechnique, un système générateur d'initiation de ladite charge, et une chambre de combustion. La principale caractéristique de ce générateur est qu'il comporte au moins un dispositif de régulation de pression de ladite chambre, ledit dispositif spécifique incluant un obturateur, un organe précontraint et des moyens de réglage dudit organe (voir plus loin). Ainsi, ledit dispositif permet de déterminer la pression de fonctionnement dudit générateur, en provoquant la fuite des gaz de combustion au-delà d'une pression seuil atteinte dans la chambre de combustion.

Préférentiellement, la chambre de combustion est munie d'au moins un évent. De cette manière, en cours de fonctionnement, les gaz de combustion s'échappent naturellement par cet évent pour permettre au générateur de gaz de remplir une fonction prédéfinie. Dans cette situation, lorsque la pression interne de la chambre de combustion dépasse une valeur seuil, le dispositif de régulation de pression se déclenche pour permettre l'évacuation d'une partie des gaz, de façon à maintenir un niveau de pression maximal constant dans ladite chambre.

De façon caractéristique, l'obturateur est constitué par une bille, l'organe précontraint est constitué par un ressort et les moyens de réglage de l'organe précontraint sont constitués par une butée réglable dont le positionnement est réalisé au moyen d'une vis.

De façon avantageuse, la vis est accessible directement de l'extérieur du générateur pour que l'opérateur puisse intervenir facilement sur la butée 30 réglable.

Préférentiellement, le dispositif de régulation de pression obture, par l'intermédiaire de la bille, une tuyère reliant l'intérieur de la chambre et l'extérieur dudit générateur, ladite bille étant plaquée hermétiquement par l'organe précontraint contre l'une des extrémités de ladite tuyère.

De façon plus générale, l'obturateur peut revêtir n'importe quelle forme qui puisse obturer un canal. La bille, le ressort et la butée sont alignés suivant un même axe et une intervention sur la vis de réglage permet à ladite butée de se déplacer le long dudit axe, soit pour se rapprocher de la bille, soit pour s'en éloigner. De cette manière, le ressort se retrouve dans un état de précontrainte plus ou moins marqué.

Avantageusement, une rondelle de positionnement est insérée entre la bille et le ressort afin de centrer ladite bille dans le dispositif, de manière à ce qu'elle corresponde bien à l'entrée de la tuyère.

De façon préférentielle, le dispositif de régulation de pression possède au moins un conduit d'évacuation des gaz de manière à ce que lorsque la bille ne ferme plus la tuyère sous l'effet de la pression des gaz dans la chambre de combustion, lesdits gaz puissent s'échapper vers l'extérieur dudit générateur. Puisque la fonction principale du dispositif de régulation de pression est de maintenir dans la chambre de combustion un niveau de pression de fonctionnement maximale prédéterminée, il faut évacuer le surplus de gaz qui pourrait occasionner une surpression trop élevée du générateur pouvant conduire à son éclatement. Ainsi, lorsque la bille n'obture plus la tuyère, elle met en communication la chambre de combustion et le conduit d'évacuation des gaz.

De façon avantageuse, le système d'initiation de la charge pyrotechnique est solidaire de l'une des parois de la chambre.

Préférentiellement, le dispositif de régulation de pression est délimité par un corps cylindrique dont une extrémité est obturée par un bouchon, ledit bouchon possédant un alésage fileté dans lequel est vissée la vis de réglage.

De façon plus précise, ledit corps cylindrique renferme le ressort, la bille et une partie de la butée.

Selon un premier mode de réalisation de l'invention, la chambre est cylindrique et le dispositif de régulation est fixé radialement à ladite chambre de façon à ce que leurs axes soient perpendiculaires entre eux.

Selon un deuxième mode de réalisation de l'invention, le dispositif de régulation de pression est fixé de façon axiale à la chambre de combustion qui est également de forme cylindrique, de manière à ce que leurs axes de révolution soient parallèles entre eux.

Ces modes de réalisation préférés de l'invention montrent que le dispositif de régulation de pression peut se fixer selon plusieurs positions, de façon à accroître l'adaptabilité du générateur pouvant être confronté à une multitude de cas à traiter.

Avantageusement, la charge pyrotechnique est constituée par un bloc de propergol possédant un canal central.

De façon préférentielle, le ressort est constitué par au moins une rondelle élastique. De façon avantageuse, les rondelles élastiques peuvent avoir différente géométrie. Plus le ressort comporte de rondelles élastiques, plus la rigidité du dispositif de régulation de pression est diminuée. Donc, à partir du nombre de rondelles retenu et de leur géométrie, le dispositif de régulation de pression peut présenter un très large spectre de performances lié à la facilité de déplacement de la bille.

Les générateurs de gaz selon l'invention présentent l'avantage dé pouvoir être fabriqués de façon uniforme, suivant le même modèle, ne nécessitant pas un usinage spécifique adapté à leur performance.

Ils présentent également l'avantage de posséder un bon niveau de sécurité dans la mesure où le dispositif de régulation de pression contribue à diminuer le risque d'éclatement desdits générateurs par une adaptation rigoureuse desdits générateurs aux configurations traitées.

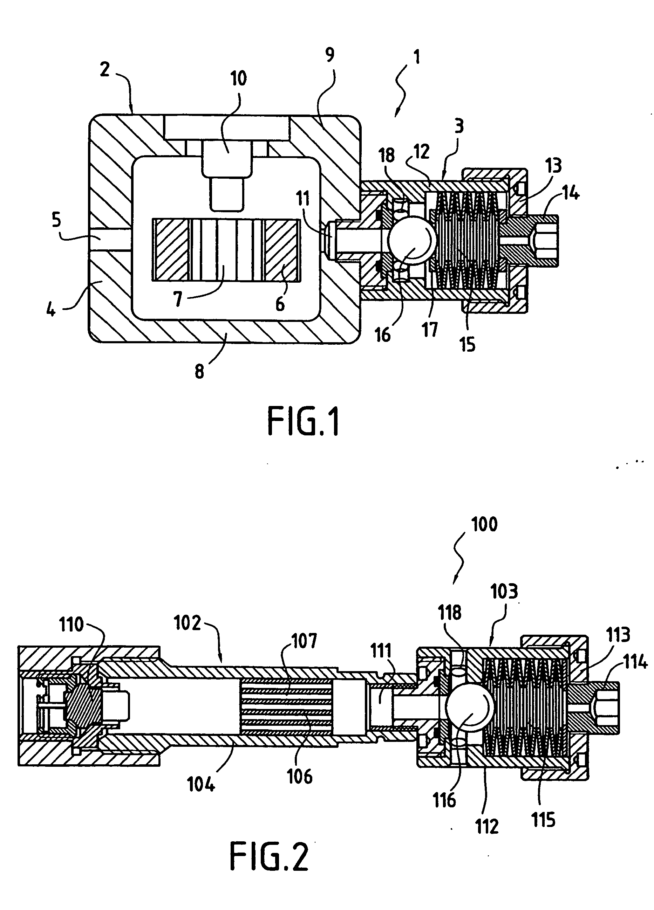

On donne ci-après une description détaillée de deux modes de réalisation préférés d'un générateur de gaz pyrotechnique selon l'invention en se référant aux figures 1 et 2.

La figure 1 est une vue en coupe longitudinale axiale d'un générateur de gaz selon l'invention, muni d'un évent et possédant un dispositif de régulation de pression en position radiale.

La figure 2 est une vue en coupe longitudinale axiale d'un générateur de gaz selon l'invention ne possédant pas d'évent et muni d'un dispositif de régulation de pression en position axiale.

Selon la figure 1, un générateur de gaz 1 pyrotechnique selon l'invention comprend une chambre de combustion 2 et un dispositif de régulation de pression 3. Ladite chambre 2 est délimitée par un corps 4 cylindrique creux comportant un évent 5 radial, et renferme une charge pyrotechnique 6 se présentant sous la forme d'un bloc de propergol cylindrique muni d'un canal central 7. Le corps 4 de la chambre 2 présente à l'une de ses extrémités une face circulaire plane 8 et à son autre extrémité une face circulaire plane 9 possédant un alésage central dans lequel est inséré un système d'initiation 10 pour mettre à feu le bloc de propergol 6. Ledit système d'initiation 10 est constitué par un allumeur usuel. Le bloc de propergol 6 est positionné dans la chambre 2 de manière à ce que leurs axes de révolution respectifs soient parallèles entre eux.

Ladite chambre 2 possède au niveau de son corps cylindrique 4 une tuyère latérale 11 constituant une deuxième ouverture et possédant un épaulement interne permettant de définir une partie de faible diamètre située du côté de ladite chambre 2 et une partie filetée de diamètre élargi située du côté de l'extérieur de la chambre 2. Le dispositif de régulation de pression 3 présente un corps cylindrique creux 12 dont une extrémité comporte une protubérance creuse filetée, dont le diamètre externe est sensiblement inférieur au diamètre interne de la partie filetée élargie de la tuyère 11, ladite protubérance étant destinée à être vissée dans la partie élargie filetée de ladite tuyère 11. De cette manière, le dispositif de régulation 3 est fixé à la paroi latérale du corps cylindrique 4 de la chambre 2, en position radiale. L'autre extrémité du corps 12 du dispositif 3 est obturée par un bouchon 13 dont la partie centrale alésée est filetée. Une vis de réglage 14 de forme cylindrique et possédant un alésage externe est vissée dans ladite partie centrale dudit bouchon 13 de façon à plus ou moins pénétrer dans l'espace interne situé dans le corps cylindrique creux 12 du dispositif de régulation de pression 3. Ledit espace interne renferme un ressort 15 composé de rondelles élastiques et une bille pleine 16 ainsi qu'une rondelle de positionnement 17 de la bille 16, ces éléments étant alignés entre eux et agencés dans le corps creux 12, de sorte que la rondelle 17 est insérée entre la bille 16 et le ressort 15 et ledit ressort 15 est comprimé entre ladite rondelle 17 et la partie émergeante de la vis 14, ladite partie faisant office de butée pour le ressort 15. Le corps cylindrique 12 du dispositif 3 possède un canal d'évacuation 18 des gaz. Au repos, lorsque le dispositif de régulation 3 n'a pas encore fonctionné, le ressort 15 précontraint exerce une pression sur la bille 16 qui obture de façon hermétique la tuyère 11 du corps 4 de la chambre 2 et isole ladite tuyère 11 du canal d'évacuation 18 des gaz.

Le mode de fonctionnement d'un générateur de gaz selon l'invention s'effectue comme suit.

Le déclenchement de l'allumeur 10 provoque la mise à feu du bloc de propergol 6 dont les gaz de combustion mettent en pression la chambre de combustion 2.

Les gaz de combustion s'échappent alors naturellement par l'évent 5 afin d'exercer une action prédéterminée. Lorsque la pression interne dans la chambre de combustion 2 dépasse une valeur seuil correspondant à la pression exercée par le ressort sur la bille 16, ladite bille 16 est alors repoussée, ouvrant la tuyère 11 du corps 4 de ladite chambre 2, qui est alors mise en communication avec le canal d'évacuation 18 du dispositif de régulation 3. Une partie des gaz s'échappe par ledit canal d'évacuation 18 jusqu'à ce que la pression dans la chambre 2 redevienne inférieure à la pression exercée par le ressort 15 sur la bille 16, qui aussitôt rebouche la tuyère 11 de la chambre 2. La pression exercée par le ressort 15 sur la bille 16 va déterminer la pression de fonctionnement du générateur de gaz selon l'invention. La pression interne dans la chambre 2 s'équilibre d'autant plus rapidement que la rigidité du dispositif de régulation 3 est forte. En cas de dépassement continuel de la valeur seuil de pression, la bille 16 se décolle de la tuyère 11 en libérant un passage continuel pour les gaz de combustion.

Selon la figure 2, un autre mode de réalisation préféré d'un générateur de gaz 100 selon l'invention se différencie du premier mode de réalisation ci avant décrit par le fait que le corps cylindrique 104 de la chambre 102 ne possède pas d'évent et que le dispositif de régulation de pression 103 est vissé en position axiale, à l'une des extrémités du corps cylindrique 104 de la chambre de combustion 102. Le fonctionnement de ce générateur 100 est analogue à celui de la figure 1 à la différence près que l'intégralité des gaz fournis par la combustion du bloc de propergol 116 s'échappe par le canal d'évacuation 118 du dispositif de régulation 113.
En effet, l'une des extrémités dudit corps 104 cylindrique présente un filetage interne et ledit dispositif de régulation de pression 103 possède une protubérance creuse filetée dont le diamètre externe est sensiblement inférieur au diamètre interne de l'extrémité filetée du corps cylindrique 104. Une charge de propergol 106 présentant un canal central 107 est logée dans la chambre de combustion 102 dont le corps cylindrique creux 104 possède à son autre extrémité un système d'initiation 110 de ladite charge de propergol 106. Le dispositif de régulation de pression 103 est délimité par un corps cylindrique creux 112 dont une extrémité est obturée par un bouchon 113 dans lequel est vissée, en position centrale, une vis de régulation 114. Le corps cylindrique creux 112 dudit dispositif 103 renferme un ressort à spirales 115 et une bille pleine 116 ainsi qu'une rondelle de positionnement 117, ces éléments étant alignés entre eux et agencés dans le corps creux 112, de sorte que la rondelle 117 est insérée entre la bille 116 et le ressort 115 et ledit ressort 115 est comprimé entre ladite rondelle 117 et la partie émergeante de la vis 114, ladite partie faisant office de butée pour le ressort 115. Le corps cylindrique 112 du dispositif 103 possède un canal d'évacuation 118 des gaz. Au repos, lorsque le dispositif de régulation 3 n'a pas encore fonctionné, le ressort 115 précontraint exerce une pression sur la bille 116 qui obture de façon hermétique la tuyère 111 du corps 104 de la chambre 102 et isole ladite tuyère 111 du canal d'évacuation 118 des gaz.

Le fonctionnement de ce mode de réalisation d'un générateur 100 selon l'invention est le suivant.

Les gaz fournis par la combustion de la charge de propergol 106 mettent en pression la chambre de combustion 102. Au-delà d'une pression seuil atteinte dans ladite chambre 102, la bille 116 du dispositif 103 est repoussée pour mettre en communication la chambre de combustion 102 et le canal d'évacuation 118, permettant alors la fuite des gaz à une pression constante. En fin de combustion, la tuyère 111 se referme.

## Revendications

1. Générateur de gaz pyrotechnique (1, 100) à pression modulable comprenant une charge pyrotechnique (6, 106), un système d'initiation (10, 110) de ladite charge (6, 106), une chambre de combustion (2, 102) et au moins un dispositif de régulation de pression (3, 103) de ladite chambre (2, 102), ledit dispositif (3, 103) incluant un obturateur (16, 116), un organe précontraint (15,115) et des moyens de réglage (14, 114) dudit organe (15, 115), **caractérisé en ce que** l'obturateur (16, 116) est constitué par une bille, l'organe précontraint (15, 115) est constitué par un ressort et les moyens de réglage (14, 114) de l'organe précontraint (15, 115) sont constitués par une butée réglable dont le positionnement est réalisé au moyen d'une vis.

2. Générateur de gaz (1, 100) selon la revendication 1, **caractérisé en ce que** ladite vis est directement accessible de l'extérieur dudit générateur (1, 100).

3. Générateur de gaz (1, 100) selon la revendication 1 ou 2, **caractérisé en ce que** le dispositif de régulation de pression (3, 103) obture, par l'intermédiaire de la bille, une tuyère (11, 111) reliant l'intérieur de la chambre (2, 102) à l'extérieur dudit générateur (1, 100), ladite bille étant plaquée hermétiquement par l'organe précontraint (15, 115) contre l'une des extrémités de ladite tuyère (11, 111).

4. Générateur de gaz (1, 100) selon la revendication 3, **caractérisé en ce que** le dispositif de régulation de pression (3, 103) possède au moins un conduit d'évacuation des gaz (18, 118) de manière à ce que, lorsque la bille ne ferme plus la tuyère (11, 111) sous l'effet de la pression des gaz dans la chambre de combustion (2, 102), lesdits gaz puissent s'échapper vers l'extérieur dudit générateur (1, 100).

5. Générateur de gaz (1) selon l'une quelconque des revendications 1 à 4, **caractérisé en ce que** le système d'initiation (10) de la charge pyrotechnique (6) est solidaire de l'une des parois de la chambre (2).

6. Générateur de gaz (1, 100) selon l'une quelconque des revendications 1 à 5, **caractérisé en ce que** le dispositif de régulation de pression (3, 103) est délimité par un corps cylindrique (12, 112) dont une extrémité est obturée par un bouchon (13, 113), ledit bouchon (13, 113) possédant un alésage fileté dans lequel est vissée la vis de réglage.

7. Générateur de gaz (1) selon la revendication 6, **caractérisé en ce que** la chambre (2) est cylindrique et le dispositif de régulation (3) est fixé radialement à ladite chambre (2) de façon à ce que leurs axes de révolution soient perpendiculaires entre eux.

8. Générateur de gaz (100) selon la revendication 6, **caractérisé en ce que** le dispositif de régulation de pression (103) est fixé de façon axiale à la chambre de combustion (102), qui est également de forme cylindrique, de manière à ce que leurs axes de révolution soient parallèles entre eux.

9. Générateur de gaz (1, 100) selon l'une quelconque des revendications 1 à 8, **caractérisé en ce que** la charge pyrotechnique (6, 106) est constituée par un bloc de propergol possédant un canal central (7,107).

10. Générateur de gaz (1, 100) selon l'une quelconque des revendications 3 à 9, **caractérisé en ce qu'**une rondelle de positionnement (17) est insérée entre la bille et le ressort afin de centrer ladite bille dans le dispositif (3, 103).

11. Générateur de gaz (1) selon l'une quelconque des revendications 1 à 10, **caractérisé en ce que** la chambre de combustion (2) est munie d'au moins d'un évent (5).

12. Générateur de gaz (1, 100) selon l'une quelconque des revendications 1 à 11, **caractérisé en ce que** le ressort (15, 115) est constitué par au moins une rondelle élastique.

## Claims

1. Adjustable-pressure pyrotechnic gas generator (1, 100) comprising a pyrotechnic charge (6, 106), an initiation system (10, 110) for initiating said charge (6, 106), a combustion chamber (2, 102) and at least one pressure regulator (3, 103) for regulating the pressure in said chamber (2, 102), said regulator (3, 103) including an obturator (16, 116), a prestressed member (15, 115) and means (14, 114) for adjusting said member (15, 115), **characterized in that** the obturator (16, 116) is formed by a ball, the prestressed member (15, 115) is formed by a spring, and the means (14, 114) for adjusting the prestressed member (15, 115) are formed by an adjustable stop, which can be positioned by means of a screw.

2. Gas generator (1, 100) according to claim 1, **characterized in that** said screw is directly accessible from the outside of said generator (1, 100).

3. Gas generator (1, 100) according to claim 1 or 2, **characterized in that** the pressure regulator (3, 103) blocks off, by means of the ball, a nozzle (11, 111) connecting the inside of the chamber (2, 102) to the outside of said generator (1, 100), said ball being pressed hermetically by the prestressed member (15, 115) against of the of said nozzle (11, 111).

4. Gas generator (1, 100) according to claim 3, **characterized in that** the pressure regulator (3, 103) has at least one gas discharge duct (18, 118) so that, when the ball no longer closes off the nozzle (11, 111) under the effect of the gas pressure in the combustion chamber (2, 102), said gases can escape to the outside of said generator (1, 100).

5. Gas generator (1) according to any one of claims 1 to 4, **characterized in that** the system (10) for initiating the pyrotechnic charge (6) is integral with one of the walls of the chamber (2).

6. Gas generator (1, 100) according to any once of claims 1 to 5, **characterized in that** the pressure regulator 13, 103) is delimited by a cylindrical body (12, 112), one end of which is blocked off by a plug (13, 113), said plug (13, 113) having a threaded bore into which the adjustment screw is screwed.

7. Gas generator (1) according to claim 6, **characterized in that** the chamber (2) is cylindrical and the regulator (3) is fixed radially to said chamber (2) so that their axes of revolution are mutually perpendicular.

8. Gas generator (100) according to claim 6, **characterized in that** the pressure regulator (103) is fixed axially to the combustion chamber (102), which is also of cylindrical shape, so that their axes of revolution are mutually parallel.

9. Gas generator (1, 100) according to any one of claims 1 to 8, **characterized in that** the pyrotechnic change (6, 106) is formed by a bloc of propellant having a central channel (7, 107).

10. Gas generator (1, 100) according to any one of claims 3 to 9, **characterized in that** a positioning washer (17) is inserted between the ball and the spring so as to centre said ball in the regulator (3, 103).

11. Gas generator (1) according to any one of claims 1 to 10, **characterized in that** the combustion chamber (2) is provided with at least vent (5).

12. Gas generator (1, 100) according to any one of claims 1 to 11, **characterized in that** the spring (15, 115) is formed by at least one resilient washer.

## Patentansprüche

1. Pyrotechnische Gasgenerator (1,100) mit variierbarem Druck, umfassend eine pyrotechnische Ladung (6, 106), ein System (10, 110) zum Auslösen der Ladung (6, 106), eine Brennkammer (2, 102) sowie wenigstens eine Vorrichtung (3, 103) zur Regelung des Drucks der Kammer (2, 102), wobei die Vorrichtung (3, 103) einen Verschluß (16, 116), ein vorgespanntes Organ (15, 115) sowie Mittel (14, 114) zum Einstellen des Organs (15, 115) einschließt, **dadurch gekennzeichnet, daß** der Verschluß (16, 116) aus einer Kugel besteht, das vorgespannte Organ (15, 115) von einer Feder gebildet ist und die Mittel (14, 114) zum Einstellen des vorgespannten Organs (15, 115) von einem verstellbaren Anschlag gebildet sind, dessen Positionierung mittels einer Schraube vollzogen wird.

2. Gasgenerator (1, 100) nach Anspruch 1, **dadurch gekennzeichnet, daß** die Schraube direkt von der Außenseite des Generators (1, 100) zugänglich ist.

3. Gasgenerator (1, 100) nach Anspruch 1 oder 2, **dadurch gekennzeichnet, daß** die Druckregelungsvorrichtung (3, 103) mit Hilfe der Kugel eine Düse (11, 111) verschließt, die den Innenraum der Kammer (2, 102) mit der Außenseite des Generators (1, 100) verbindet, wobei die Kugel durch das vorgespannte Organ (15, 115) hermetisch gegen das eine der Enden der Düse (11, 111) gedrückt wird.

4. Gasgenerator (1, 100) nach Anspruch 3, **dadurch gekennzeichnet, daß** die Druckregelungsvorrichtung (3, 103) wenigstens eine Leistung zum Abführen der Gase (18, 118) besitzt, so daß dann, wenn die Kugel das Ventil (11, 111) unter der Wirkung des der Gase in der Brennkammer (2, 102) nicht mehr verschließt, die Gase zur Außenseite des Generators (1, 100) entweichen können.

5. Gasgenerator (1) nach der Ansprüche 1 bis 4, **dadurch gekennzeichnet, daß** das System (10) zum Auslösen der pyrotechnischen Ladung (6) mit einer der der Kammer (2) fest verbunden ist.

6. Gasgenerator (1, 100) nach einem der Anspruche 1 bis 5, **dadurch gekennzeichnet, daß** die Druckregelungsvorrichtung (3, 103) durch einen zylindrischen Körper (12, 112) begrenzt ist, dessen eines Ende durch eine Kappe (13, 113) verschlossen ist, wobei die Kappe (13, 113) eine Gewindebohrung aufweist, in welche die Stellschraube eingeschraubt ist.

7. Gasgenerator (1) nach Anspruch 6, **dadurch gekennzeichnet, daß** die Kammer (2) zylindrisch ist und die Regelungsvorrichtung (3) radial an der Kammer (2) befestigt ist, so daß ihre Rotationsachsen senkrecht zueinander verlaufen.

8. Gasgenerator (100) nach Anspruch 6, **dadurch gekennzeichnet, daß** die Druckregelungsvorrichtung (103) axial an der ebenfalls zylinderförmigen Brennkammer (102) befestigt ist, so daß ihre Rotationsachsen parallel zueinander verlaufen.

9. Gasgenerator (1, 100) nach einem der Ansprüche 1 bis 8, **dadurch gekennzeichnet, daß** die pyrotechnische Ladung (6, 106) von einem Treibstoffblock mit einem mittleren Kanal (7, 107) gebildet ist.

10. Gasgenerator (1, 100) nach einem der Ansprüche 3 bis 9, **dadurch gekennzeichnet, daß** zwischen der Kugel und der Feder eine Positionierungsscheibe (17) eingefügt ist, um die Kugel in der Vorrichtung (3, 103) zu zentrieren.

11. Gasgenerator (1) nach einem der Ansprüche 1 bis 10, **dadurch gekennzeichnet, daß** die Brennkammer (2) mit wenigstens einer Entlüftungsöffnung (5) versehen ist.

12. Gasgenerator (1, 100) nach einem der Ansprüche 1 bis 11, **dadurch gekennzeichnet, daß** die Feder (15, 115) von wenigstens einer Federscheibe gebildet ist.
